Europäisches Patentamt

European Patent Office

Office européen des brevets

(19)

(11) Publication number : **0 647 400 A1**

# EUROPEAN PATENT APPLICATION

(12)

(21) Application number : **94305019.5**

(22) Date of filing : **07.07.94**

(51) Int. Cl.⁶ : **A01N 47/38**, A01N 43/54,
// (A01N47/38, 43:54),
(A01N43/54, 47:38)

(30) Priority : **08.07.93 GB 9314128**

(43) Date of publication of application :
**12.04.95 Bulletin 95/15**

(84) Designated Contracting States :
**AT BE CH DE DK ES FR GB GR IE IT LI LU NL
PT SE**

(71) Applicant : **AgrEvo UK Limited
Hauxton Cambridge CB2 5HU (GB)**

(72) Inventor : **Salembier, Etienne
9 Impasse de la Ferme
F-91470 Limours (FR)**

(74) Representative : **Waldman, Ralph David et al
AgrEvo UK Limited
Patent Department
Chesterford Park
Saffron Walden Essex CB10 1XL (GB)**

(54) **Fungicide mixtures.**

(57)    There is provided a fungicidal composition comprising prochloraz, or a metal complex thereof, and cyprodinil. The mixture has synergistic properties.

EP 0 647 400 A1

Jouve, 18, rue Saint-Denis, 75001 PARIS

Field of the invention

This invention relates to compositions with useful fungicidal properties.

The present invention provides a fungicidal composition comprising

a) prochloraz and

b) cyprodinil.

Prochloraz is a known fungicide and is the common name for 1-[N-propyl-N-{2-(2,4,6-trichlorophenoxy) ethyl]carbamoyl}imidazole, and that name is used in the specification to also include metal complexes of this compound. Cyprodinil is a known fungicide, and is the common name for 2-anilino-4-cyclopropyl-6-methylpyrimidine. This compound is disclosed in EP 310550.

We have found that the compositions of the invention have advantageous properties over the individual components and that synergism is often demonstrated, and yield of crop may be increased.

The ratios of the prochloraz to cyprodinil vary over a wide range but are usually in the range 1:5 to 5:1. These ratios are based on the weight of the free base.

In addition, other pesticides may be employed in conjunction with the active ingredients described above providing they do not adversely affect the interaction between the fungicidal components. For example it is sometimes useful to include additional fungicides, which extend the range of activity in order to control a wider spectrum of fungi.

The compositions of the invention are active against a wide range of fungi, e.g. powdery mildew (*Erysiphe graminis*) on cereal crops such as wheat, barley, oats and rye and other foliar diseases such as glume blotch (*Septoria nodorum*), leaf blotch (*Rhynchosporium secalis*) and rusts (e.g. *Puccinia graminis*). Certain compositions of the present invention can be used to control seed-borne organisms such as bunt (*Tilletia caries*) on wheat, loose smut (*Ustilago nuda* and *Ustilago hordei*) on barley and oats, leaf spot (*Pyrenophora avenae*) on oats and leaf stripe (*Pyrenophora graminis*) on barley. The compositions can also be applied to rice for control of rice blast (*Pyricularia oryzae*), to horticultural crops such as apple trees for the control of apple scab (*Venturia inaequalis*), roses and other ornamentals for the control of powdery mildew (*Sphaerotheca pannosa*), rust and black spot, to many crops, for the control of *Botrytis cinerea,* to turf for the control of dollar spot (*Sclerotinia homeocarpa*) and to stored produce for the control of storage rot organisms of citrus fruit, potatoes, sugar beet, apples, pears etc., (e.g. *Penicillium* spp., *Aspergillus* spp. and *Botrytis* spp.). Other diseases that may be combatted include *Helminthosporium* spp. and *Cercospora* spp. The compositions of the invention are particularly useful in combating eyespot (*Pseudocercosporella herpotrichoides*), a fungus not disclosed in EP 310550.

Metal complexes of prochloraz are described in our British Patent 1,567,521 and preferred complexes are those formed with manganese (II) chloride, copper (II) chloride or zinc chloride.

The compositions of the invention may be employed in many forms and are often most conveniently prepared immediately prior to use by mixing the ingredients in their commercially available form, if necessary in a quantity of water.

In addition to tank mixing immediately prior to use the compositions containing prochloraz and cyprodinil may be formulated into a concentrate or in a ready for use form, especially as a dust or granule which can be applied to the area where the crop is to be grown. Such formulations comprise the active ingredients associated with powder diluents such as kaolin, Fuller's earth, attapulgite or limestone grit with which the active ingredients are mixed and/or granulated by known methods.

The concentrate of the active ingredients (when used as the sole active components) in a composition for direct application to the crop by conventional methods is preferably within the range of 0.01 to 10 per cent by weight of the composition, especially 0.005 to 5 per cent by weight, but more concentrated compositions containing up to 40 per cent may be desirable.

The composition of the invention can be applied directly to plants by, for example, spraying or dusting either at the time which the fungus has begun to appear on the plant or before the appearance of fungus, as a protective measure. A suitable rate of application of the prochloraz is from 0.05 to 3 kilograms per hectare, preferably from 0.25 to 1.0 kilogram per hectare.

The invention thus includes a method for controlling a phytopathogenic fungus which comprises applying to seeds, plants and other vegetative material or their habitat prochloraz, or a metal complex thereof, and cyprodinil, components (a) and (b) being applied either together or in sequence.

Example

Winter wheat was sprayed in the spring with prochloraz and cyprodinil and mixtures of the two. Three replicates were used for each treatment. Seven and nine weeks after spraying, the wheat was assessed for level of eyespot, *Pseudocercosporella herpotrichoides* compared with untreated wheat whereby the level of control could be calculated.

To indicate the existence of synergism between the active components the results were treated in the manner described by Colby S.R., "Calculating Synergistic and Antagonistic Responses of Herbicide Combinations" in Weeds 1967 15, 20-22). In this method the "expected" percent control of growth, E, of the combination compared with untreated control is given by the equation

$$E = A + F - \frac{AF}{100}$$

where A is the % control by prochloraz used alone at a given concentration and F is the % control by cyprodinil, used alone at a given concentration. If the observed control of the mixture is greater than E the results indicate synergism.

The results are as follows. In the table Component P is prochloraz and component C is cyprodinil.

| Component | Application rate (g cpd/ha) | % control | | | |
|---|---|---|---|---|---|
| | | 7 weeks | | 9 weeks | |
| | | observed | expected (E) | observed | expected (E) |
| C | 75 | 74 | | 35 | |
| P | 450 | 57 | | 18 | |
| C + P | 750 + 450 | 95 | 89 | 60 | 47 |

## Claims

**1)** A fungicidal composition comprising
a) prochloraz, or a metal complex thereof, and
b) cyprodinil.

**2)** A composition according to claim 1 wherein the ratio of the prochloraz to cyprodinil is in the range 5:1 to 1:5 based on the weight of the free base.

**3)** A method for controlling a phytopathogenic fungus which comprises applying to seeds, plants and other vegetative material or their habitat
prochloraz, or a metal complex thereof, and
cyprodinil,
components (a) and (b) being applied either together or in sequence.

**European Patent Office**

## EUROPEAN SEARCH REPORT

Application Number

EP 94 30 5019

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | EP-A-0 627 164 (CIBA-GEIGY AG) 7 December 1994<br>* the whole document *<br>--- | 1-3 | A01N47/38<br>A01N43/54<br>//(A01N47/38,<br>43:54),<br>(A01N43/54,<br>47:38) |
| Y | GB-A-2 258 615 (SCHERING AG) 17 February 1993<br>* page 3, line 9-11 *<br>--- | 1-3 | |
| Y | EP-A-0 548 025 (CIBA-GEIGY AG) 23 June 1993<br>p. 1, 11-37 and p. 2, 1. 11-23<br>--- | 1-3 | |
| Y | EP-A-0 253 714 (MONTEDISON S.P.A.) 20 January 1988<br>* the whole document *<br>--- | 1-3 | |
| D,A | EP-A-0 310 550 (CIBA-GEIGY AG) 5 April 1989<br>----- | 1-3 | |

| | TECHNICAL FIELDS SEARCHED (Int.Cl.6) |
|---|---|
| | A01N |

The present search report has been drawn up for all claims

| Place of search | Date of completion of the search | Examiner |
|---|---|---|
| MUNICH | 24 January 1995 | Klaver, J |

EPO FORM 1503 03.82 (P04C01)